# EUROPÄISCHE PATENTSCHRIFT

(11) **EP 1 738 430 B1**
(45) Veröffentlichungstag und Bekanntmachung des Hinweises auf die Patenterteilung: **01.04.2015**
(21) Anmeldenummer: 05716787.6
(22) Anmeldetag: 24.02.2005
(51) Int. Cl.: H01M 10/052, H01M 10/0567, H01M 10/0569, H01M 4/134

(54) **ELEKTROLYTZUSAMMENSETZUNG SOWIE DEREN VERWENDUNG ALS ELEKTROLYTMATERIAL FÜR ELEKTROCHEMISCHE ENERGIESPEICHERSYSTEME**
ELECTROLYTE COMPOSITION IN ADDITION TO THE USE THEREOF AS AN ELECTROLYTE MATERIAL FOR ELECTROCHEMICAL ENERGY STORAGE SYSTEMS
COMPOSITION ELECTROLYTIQUE ET UTILISATION EN TANT QUE MATERIAU ELECTROLYTIQUE POUR DES SYSTEMES D'ACCUMULATION D'ENERGIE ELECTROCHIMIQUES

(30) Priorität: 20.04.2004 DE 102004018929
(43) Veröffentlichungstag der Anmeldung: 03.01.2007
(73) Patentinhaber: Evonik Degussa GmbH, 45128 Essen (DE)
(72) Erfinder: JOST, Carsten, 40476 Düsseldorf (DE); HOLZAPFEL, Michael, CH-5200 Brugg (CH); NOVÁK, Petr, CH-5200 Brugg (CH); PRODI-SCHWAB, Anna, 45133 Essen (DE); HENNIGE, Volker, 48249 Dülmen (DE); HYING, Christian, 46414 Rhede (DE)
(86) Internationale Anmeldenummer: PCT/EP2005/050788
(87) Internationale Veröffentlichungsnummer: WO 2005/104288

(56) Entgegenhaltungen:
- WO-A-01/04097
- WO-A-01/93363
- WO-A-97/02252
- BLOMGREN G E: "Liquid electrolytes for lithium and lithium-ion batteries" JOURNAL OF POWER SOURCES, ELSEVIER SEQUOIA S.A. LAUSANNE, CH, Bd. 119-121, 1. Juni 2003 (2003-06-01), Seiten 326-329, XP004430190 ISSN: 0378-7753
- PATENT ABSTRACTS OF JAPAN Bd. 2003, Nr. 04, 2. April 2003 (2003-04-02) & JP 2002 373704 A (YUASA CORP), 26. Dezember 2002 (2002-12-26) in der Anmeldung erwähnt
- PATENT ABSTRACTS OF JAPAN Bd. 2000, Nr. 02, 29. Februar 2000 (2000-02-29) & JP 11 307121 A (MITSUBISHI CHEMICAL CORP), 5. November 1999 (1999-11-05) in der Anmeldung erwähnt
- BLOMGREN G E: "Electrolytes for advanced batteries" JOURNAL OF POWER SOURCES, ELSEVIER SEQUOIA S.A. LAUSANNE, CH, Bd. 81-82, September 1999 (1999-09), Seiten 112-118, XP004363132 ISSN: 0378-7753
- SATO T ET AL: "Ionic liquids containing carbonate solvent as electrolytes for lithium ion cells" JOURNAL OF POWER SOURCES, ELSEVIER SEQUOIA S.A. LAUSANNE, CH, Bd. 138, Nr. 1-2, 15. November 2004 (2004-11-15), Seiten 253-261, XP004618361 ISSN: 0378-7753

## Beschreibung

Die Erfindung betrifft eine Elektrolytzusammensetzung sowie deren Verwendung in elektrochemischen Energiespeichersystemen.

Lithium-Ionen-Batterien sind Energiespeichersysteme, die eine sehr hohe Energiedichte aufweisen (bis zu 180 Wh/kg). Ihre Anwendung finden diese Lithium-Ionen-Batterien vor allem im Bereich der tragbaren Elektronik, wie beispielsweise in Laptops, Camcordern, Handhelds oder Mobiltelefonen, sogenannten Handys. Das negative Elektrodenmaterial besteht hierbei vor allem aus graphitischem Kohlenstoff, Leitfähigkeitsruß und einem geeigneten Bindermaterial. Diese "Graphitelektrode" wird aufgrund seiner stabilen Zykleneigenschaften und seiner - im Vergleich zum Lithiummetall (das in so genannten "Lithium-Metall-Batterien" zum Einsatz kommt) - recht hohen Handhabungssicherheit verwendet, obwohl graphitischer Kohlenstoff ein sehr niedriges Potential von ca. 100 - 200 mV vs. Li/Li⁺ aufweist. Beim Laden der Lithium-Ionen-Batterie lagern sich Lithium-Ionen in den graphitischen Kohlenstoff ein, wobei die Lithium-Ionen hierbei durch Elektronenaufnahme reduziert werden. Beim Entladen kehrt sich dieser Prozess um. Als positives Elektrodenmaterial werden zumeist Lithium-Übergangsmetalloxide, wie beispielsweise LiCoO₂, LiNiO₂ oder LiMnₓNi_{y}Co_{1-x-y}O₂ verwendet, die ein hohes Potential (3,8 - 4,2 V vs. Li/Li⁺) haben, eingesetzt.

Die hohe Energiedichte der Lithium-Ionen-Batterien ergibt sich, aufgrund der Elektrodenkombination, vor allem durch das hohe Potentialfenster, welches bis zu 4 V betragen kann. Diese hohe Potentialdifferenz stellt hohe Ansprüche an die verwendeten Elektrolytmaterialien, beispielsweise wird als Elektrolyt eine Kombination aus einer polaren Flüssigkeit mit einem Lithiumsalz eingesetzt, wobei das Lithiumsalz die Ionenleitung übernimmt. Unter den gegebenen Bedingungen in einer Lithium-Ionen-Batterie sind in der Regel Elektrolyte gemäß dem Stand der Technik nicht dauerhaft beständig, da an der negativen Elektrode sowohl die Elektrolyt-Flüssigkeit als auch das Lithium-Leitsalz reduziert werden kann. Die technische Brauchbarkeit der Lithium-Ionen-Batterien verdankt man dem Umstand, dass ein wichtiger Bestandteil herkömmlicher Elektrolyte, beispielsweise Ethylencarbonat, bei der Reduktion an der negativen Elektrode einen im Elektrolyt unlöslichen Film ("Solid Electrolyte Interphase" bzw. "SEI") auf der Oberfläche des Graphits bildet, wobei dieser Film die Ionenleitung zulässt, aber eine weitere Reduktion des Elektrolyten verhindert.

Ethylencarbonat, welches bei Raumtemperatur fest ist, wird im allgemeinen als Gemisch mit niedrig viskosen Lösungsmitteln, wie beispielsweise Dimethylcarbonat (DMC) oder Ethylmethylcarbonat (EMC) verwendet, um die Leitfähigkeit zu erhöhen. Diese niedrig viskosen Zusätze machen den Elektrolyten bei erhöhten Temperaturen flüchtig und leicht entflammbar.

Blomgren et al. beschreiben die Verwendung ionischer Flüssigkeiten als Elektrolytmaterialien in der Lithium-Ionen-Batterie (A. Webber, G. E. Blomgren, Advances in Lithium-Ion Batteries (2002), 185-232; G. E. Blomgren, J. Power Sources 2003, 119-121, 326-329).

Covalent Associates beschreibt in WO 01/93363 einen nicht-entflammbaren Elektrolyten bestehend aus einem Salz mit einem organischen Kation oder einer ionischen Flüssigkeit, einem organischen Lösemittel, einem Acrylat- oder Fluorpolymer und einem Leitsalz.

In JP 2002373704 beschreibt Yuasa Corp. einen nicht-wässrigen Elektrolyten bestehend aus 1-Ethyl-3-methylimidazolium, einem Lithium-Salz und einem cyclischen Ester mit einer π-Bindung.

Mitsubishi Chemicals Industries Ltd. beschreibt in JP 11307121 einen Elektrolyten bestehend aus einer ionischen Flüssigkeit basierend auf quaternäre Imidazolium- oder Pyridinium-Ionen und von 1 bis 130 Vol.-% einer organischen cyclischen Verbindung.

Der Aufsatz von G. E. Blomgren im Journal of Power Sources 119-121 (2003), 326-329*,* offenbart die Entwicklung und den Einsatz von Elektrolyten, die ionische Flüssigkeiten, Leitsalze und Filmbildner enthalten, in Lithium-Ionen-Batterien. Besonders hervorgehoben wird die Bedeutung des Elektrolyten für die Leistung und Stabilität von Lithium-Ionen-Batterien.

In einer vorangehenden Publikation im Journal of Power Sources 81-82 (1999), 112-118*,* erläutert G. E. Blomgren Anforderungen an die Elektroden für Lithium- bzw. Lithium-Ionen-Batterien und die Bedeutung der Leitfähigkeit, Viskosität und Benetzungseigenschaften des Elektrolyten. Die Verwendung eines Separators wird diskutiert, jedoch nur auf den Polyolefin-Typ bezogen. Die Verwendung von Separatoren aus anderem Material beschreibt auch dieser Aufsatz nicht.

In der Offenlegungsschrift WO 01/93363 A2 werden elektrolytische Gele mit reduzierter Entflammbarkeit offenbart, die ionische Flüssigkeiten, Leitsalze und Filmbildner enthalten, sowie die Verwendung solcher Gele in elektrochemischen Energiespeichern, elektrochromen Displays und anderen elektronischen Bauteilen. Die gelartigen Eigenschaften dieser Elektrolyte werden durch Zugabe von Bindern ermöglicht, die Polymere, Fluorpolymere, acrylische Polymere oder Co-Polymere sein können bzw. aus entsprechenden Monomeren zu solchen Polymeren umgewandelt werden. Auch die Herstellung einer Lithium-Ionen-Batterie, für die eine Kathode, eine Kohlenstoff-Anode und ein Separator eingesetzt werden, wird beschrieben. Über Anforderungen an Separatoren oder deren Verwendung wird nichts ausgesagt.

Die Schrift WO 01/04097 A2 offenbart ionische Flüssigkeiten verschiedener Ionenleitfähigkeit, Viskosität, thermischer Stabilität und Lyophobizität, sowie deren Verwendung in Elektrolyten, Schmiermitteln, Extraktionslösemitteln, Reaktionsmedien, Zweiphasen-Katalysatormedien und in elektrochromen und elektrolumineszenten Bauteilen. Spezielle, an diese Eigenschaften angepasste Separatoren sind nicht vorgesehen.

WO 97/02252 sieht ionische Flüssigkeiten und ihre Verwendung in nichtwässrigen Batterien, Elektrolytkondensatoren, sowie in der Galvanisierung, Katalyse und in chemischen Abscheidereaktionen vor. Dabei wird auf Separatoren oder deren Verwendung kein Bezug genommen.

JP 2002-373704 A stellt eine Sekundärbatterie mit einer Kathode, einer Anode, und einem Separator vor, die mit einem nichtwässrigem Elektrolyten ausgestattet ist, der eine ionische Flüssigkeit enthält.

Eine nicht entflammbare ionische Flüssigkeit, die in einem Elektrolyten mit geringer Viskosität und gesteigerter Beweglichkeit von Lithiumionen in einer Lithium-Ionen-Batterie eingesetzt werden kann, ist Gegenstand der JP 11-307121 A. Separatoren oder deren Verwendung werden in dieser Schrift ebenfalls nicht offenbart.

Weitere schwer oder nicht entflammbare Elektrolyten werden in einer Veröffentlichung im Journal of Power Sources 138 (2004), 253-261, von Takaya Sato et al. vorgeschlagen. Die hier besprochenen Elektrolyten basieren auf ionischen Flüssigkeiten, die quaternäre aliphatische Ammonium Ionen aufweisen. Sie sind besonders für den Einsatz in Lithium-Ionen-Batterien geeignet. Auch hier wird auf die besondere Problematik nicht näher eingegangen, die sich aus der Kombination des Elektrolyten mit dem Material des Separators ergibt.
Die vorliegende Erfindung stellt eine Elektrolytzusammensetzung bereit, die schwer entflammbar ist und somit zu einem sicheren Betrieb von Lithium-Ionen-Batterien führt, und die zusammen mit einem keramischen Separator verwendet wird.

Es wurde gefunden, dass eine schwer entflammbare Elektrolytzusammensetzung bestehend aus einer ionischen Flüssigkeit, einem Leitsalz und einem Filmbildner als Elektrolyt in der Lithium-Ionen-Batterie eingesetzt werden kann und durch Zusatz eines geeigneten Filmbildners mit stabilem Zyklenverhalten betrieben werden kann. Die Elektrolytzusammensetzung hat den Vorteil, dass keine bzw. nur maximal 20 Gew.-% leichtflüchtige Bestandteile enthalten sind. Somit enthält die Elektrolytzusammensetzung, die auf nicht entflammbaren ionischen Flüssigkeiten basiert, nahezu keine brennbaren Bestandteile und somit ist der nutzbare Temperaturbereich der Lithium-Ionen-Batterie weniger eingeschränkt als bei Elektrolytzusammensetzungen gemäß dem Stand der Technik. Der Einsatz der Elektrolytzusammensetzung kann die Toleranz der Lithium-Ionen-Batterie gegenüber einer falschen Handhabung, wie beispielsweise Überladung, weiter erhöhen. Durch den nahezu vollständigen Verzicht auf organische Lösemittel in der Elektrolytzusammensetzung können Separatormaterialien in der Lithium-Ionen-Batterie eingesetzt werden, die unter Umständen von organischen Lösemitteln angelöst werden. Dies ist gerade bei polymer-basierten Batterien von Vorteil, da der Einsatz der Elektrolytzusammensetzung zu keinen Problemen bzgl. der Dichtigkeit bzw. Haltbarkeit führt. Der Einsatz der Elektrolytzusammensetzung in Lithium-Ionen-Batterien führt auch bei einer hohen Anzahl von Lade- und Entladezyklen zu einem geringen Verlust an reversibler Kapazität der Lithium-Ionen-Batterie. Die Verwendung der Elektrolytzusammensetzung als Elektrolytmaterial erhöht die Sicherheit des Betriebes von Batterien erheblich und verbessert insbesondere das Tief- und Hochtemperaturverhalten. Die Elektrolytzusammensetzung führt zu einem stabilen Lade- und Entladeverhalten der Lithium-Ionen-Batterien.

Überraschenderweise zeigte sich, dass durch die Verwendung der Elektrolytzusammensetzung zur Herstellung einer Lithium-Ionen-Batterie unter gleichzeitiger Verwendung eines keramischen Separators eine weitere Verbesserung der Handhabungssicherheit erzielt werden kann, da sowohl auf den Gehalt an leichtflüchtigen Bestandteilen in der Elektrolytzusammensetzung nahezu verzichtet bzw. verzichtet werden kann, als auch ein Separator eingesetzt wird, der sich durch eine hohe Temperaturbeständigkeit auszeichnet.

Ferner zeigte sich, dass diese Kombination von der Elektrolytzusammensetzung mit einem keramischen Separator eine verbesserte thermische Stabilität auch bei einem längeren Erhitzen auf 100°C bzw. 150°C aufweist. Des weiteren zeigt die Elektrolytzusammensetzung in Kombination mit einem keramischen Separator in einer Lithium-Ionen-Batterie eine verbesserte Benetzung des keramischen Separators durch die Elektrolytzusammensetzung.

Gegenstand der Erfindung ist die Verwendung der Elektrolytzusammensetzung in elektrochemischen Energiespeichersystemen, die dadurch gekennzeichnet ist, dass die elektrochemischen Energiespeichersysteme Lithium-Ionen-Batterien sind, die einen keramischen Separator aufweisen, und die Elektrolytzusammensetzung sich dadurch auszeichnet, dass sie eine Basiskomponente bestehend aus
80 bis 99,5 Gew.-% zumindest einer ionischen Flüssigkeit (A), die einen Schmelzpunkt von kleiner 100°C aufweist,
0,5 bis 10 Gew.-% eines Filmbildners (B) und
0 bis 10 Gew.-% eines Viskositätsmodifiers (C),
und ein Leitsalz (D), wobei dieses Leitsalz (D) von 0,25 mol/(kg Basiskomponente) bis zur Löslichkeitsgrenze in der Basiskomponente enthalten ist, aufweist.

Bevorzugt besteht die Elektrolytzusammensetzung aus
einer Basiskomponente bestehend aus
80 bis 99,5 Gew.-% zumindest einer ionischen Flüssigkeit (A), die einen Schmelzpunkt von kleiner 100°C aufweist,
0,5 bis 10 Gew.-% eines Filmbildners (B) und
0 bis 10 Gew.-% eines Viskositätsmodifiers (C),
und einem Leitsalz (D), wobei dieses Leitsalz von 0,25 mol/(kg Basiskomponente) bis zur Löslichkeitsgrenze in der Basiskomponente enthalten ist.

In einer bevorzugten Ausführungsform der Elektrolytzusammensetzung weist diese keinen Viskositätsmodifier auf. Auf diese Weise kann der Anteil an leichtflüchtigen Komponenten in der erfindungsgemäßen Elektrolytzusammensetzung deutlich herabgesenkt werden. Die Elektrolytzusammensetzung weist somit vorzugsweise eine Basiskomponente bestehend aus 90 bis 99,5 Gew.-% zumindest einer ionischen Flüssigkeit (A), die einen Schmelzpunkt von kleiner 100°C aufweist, und
0,5 bis 10 Gew.-% eines Filmbildners (B)
auf, insbesondere besteht die Basiskomponente jedoch aus:
92 bis 98 Gew.-% zumindest einer ionischen Flüssigkeit (A), die einen Schmelzpunkt von kleiner 100°C aufweist, und
2 bis 8 Gew.-% eines Filmbildners (B).

Unter ionischen Flüssigkeiten werden im Sinne dieser Erfindung Salze verstanden, die einen Schmelzpunkt von maximal 100°C aufweisen. Einen Überblick über ionische Flüssigkeiten geben beispielsweise Welton (Chem. Rev. 99 (1999), 2071) und Wasserscheid et al. (Angew. Chem. 112 (2000), 3926). Vorzugsweise enthalten die erfindungsgemäßen Elektrolytzusammensetzungen ionische Flüssigkeiten (A), die organische Kationen aufweisen. Bevorzugt enthalten die erfindungsgemäßen Elektrolytzusammensetzungen jedoch ionische Flüssigkeiten (A), die ein Kation oder mehrere Kationen gemäß den nachfolgenden Strukturen aufweisen, 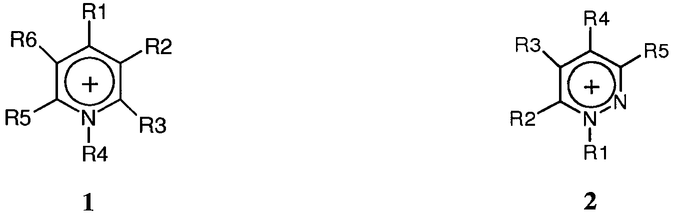 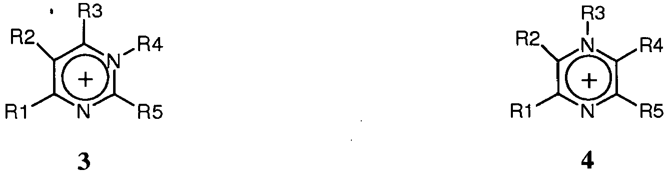 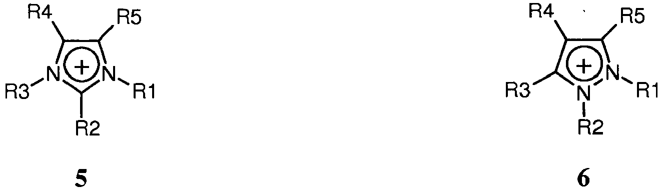 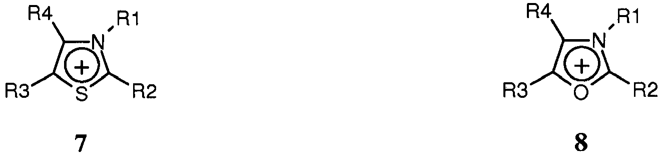 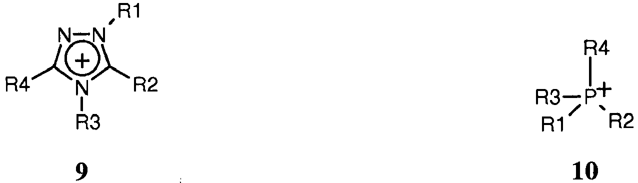 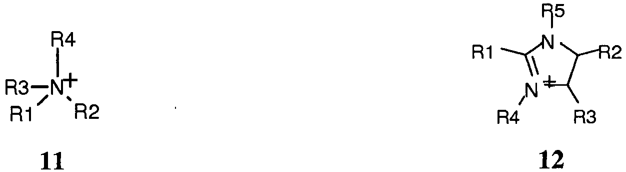 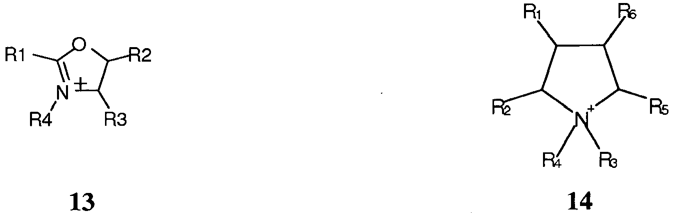 wobei R1, R2, R3, R4, R5 und R6, gleich oder unterschiedlich und
- Wasserstoff, Hydroxy-, Alkoxy-, Sulfanyl- (R-S-), NH₂-, NHR"-, NR"₂-Gruppe, wobei R" eine Alkylgruppe mit 1 bis 8 Kohlenstoffatomen ist, oder Halogen, insbesondere F, Cl, Br oder I sein kann,
- einen linearen oder verzweigten aliphatischen Kohlenwasserstoffrest mit 1 bis 20, vorzugsweise 1 bis 8, bevorzugt 1 bis 4 Kohlenstoffatomen, der substituiert, beispielsweise mit einer Hydroxy-, Alkyl- mit 1 bis 8, vorzugsweise 1 bis 4 Kohlenstoffatomen und/oder Halogen-Gruppe, oder unsubstituiert sein kann,
- einen cycloaliphatischen Kohlenwasserstoffrest mit 5 bis 30, vorzugsweise 5 bis 10, bevorzugt 5 bis 8 Kohlenstoffatomen, der substituiert, beispielsweise mit einer Hydroxy-, Alkyl- mit 1 bis 8, vorzugsweise 1 bis 4 Kohlenstoffatomen und/oder Halogen-Gruppe, oder unsubstituiert sein kann,
- einen aromatischen Kohlenwasserstoffrest mit 6 bis 30, vorzugsweise 6 bis 12, bevorzugt 6 bis 10 Kohlenstoffatomen, der substituiert, beispielsweise mit einer Hydroxy-, Alkyl- mit 1 bis 8, vorzugsweise 1 bis 4 Kohlenstoffatomen und/oder Halogen-Gruppe, oder unsubstituiert sein kann,
- einen Alkylarylrest mit 7 bis 40, vorzugsweise 7 bis 14, bevorzugt 7 bis 12 Kohlenstoffatomen, der substituiert, beispielsweise mit einer Hydroxy-, Alkyl- mit 1 bis 8, vorzugsweise 1 bis 4 Kohlenstoffatomen und/oder Halogen-Gruppe, oder unsubstituiert sein kann,
- einen durch ein oder mehrere Heteroatome (Sauerstoff, NH, NCH₃) unterbrochenen linearen oder verzweigten aliphatischen Kohlenwasserstoffrest mit 2 bis 20 Kohlenstoffatomen, der substituiert, beispielsweise mit einer Hydroxy-, Alkyl- mit 1 bis 8, vorzugsweise 1 bis 4 Kohlenstoffatomen und/oder Halogen-Gruppe, oder unsubstituiert sein kann,
- einen durch ein oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O)₂-O-, -O-S(O)₂-, -S(O)₂-NH-, -NH-S(O)₂-, -S(O)₂-N(CH₃)-, -N(CH₃)-S(O)₂-, unterbrochenen linearen oder verzweigten aliphatischen Kohlenwasserstoffrest mit 2 bis 20 Kohlenstoffatomen, der substituiert, beispielsweise mit einer Hydroxy-, Alkylmit 1 bis 8, vorzugsweise 1 bis 4 Kohlenstoffatomen und/oder Halogen-Gruppe, oder unsubstituiert sein kann, oder
- einen endständig -OH, -NH₂, -N(H)CH₃ funktionalisierten linearen oder verzweigten aliphatischen Kohlenwasserstoffrest mit 1 bis 20 Kohlenstoffatomen, der substituiert, beispielsweise mit einer Hydroxy-, Alkyl- mit 1 bis 8, vorzugsweise 1 bis 4 Kohlenstoffatomen und/oder Halogen-Gruppe, oder unsubstituiert sein kann.

Bevorzugt enthält die erfindungsgemäße Elektrolytzusammensetzung zumindest eine ionische Flüssigkeit (A), die ein Kation basierend auf Ammonium-, Pyridinium-, Pyrrolidinium-, Pyrrolinium-, Oxazolium-, Oxazolinium-, Imidazolium-, Thiazolium- oder Phosphoniumionen aufweist.

Die in den Elektrolytzusammensetzungen enthaltenen ionischen Flüssigkeiten (A) weisen vorzugsweise ein oder mehrere Anionen, ausgewählt aus Phosphat, Halogenphosphaten, insbesondere Hexafluorphosphat, Alkylphosphaten, Arylphosphaten, Nitrat, Sulfat, Hydrogensulfat, Alkylsulfaten, Arylsulfaten, perfluorierten Alkyl- und Arylsulfaten, Sulfonat, Alkylsulfonaten, Arylsulfonaten, perfluorierten Alkyl- und Arylsulfonaten, insbesondere Trifluormethylsulfonat, Tosylat, Perchlorat, Tetrachloroaluminat, Heptachlorodialuminat, Tetrafluorborat, Alkylboraten, Arylboraten, Amide, insbesondere perfluorierte Amide, Dicyanamid, Saccharinat, Thiocyanat, Carboxylate, Acetate, bevorzugt Trifluoracetat, und Bis(perfluoralkylsulfonyl)amid-Anionen, auf.

In einer besonderen Ausführungsform der Elektrolytzusammensetzung enthält diese bevorzugt ionische Flüssigkeiten (A), die zumindest ein Salz, aufweisend als Kation ein Imidazolium-, ein Pyridinium-, insbesondere ein in Position 4 substituiertes Pyridinium-, ein Ammonium- oder Phosphonium-Ion mit den nachfolgenden Strukturen: 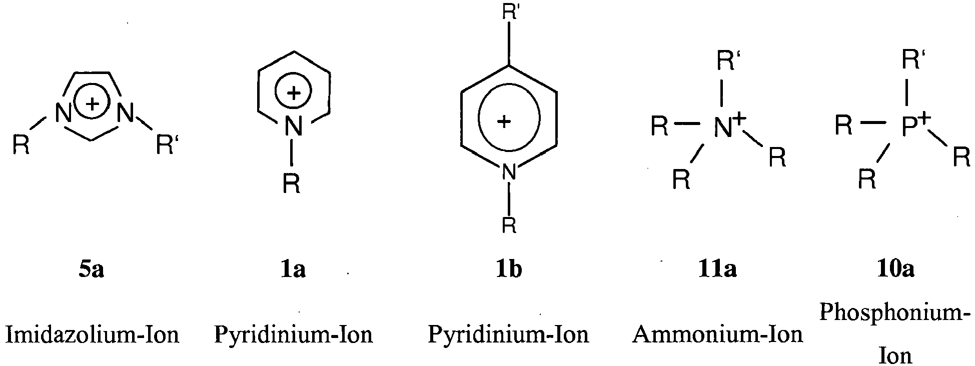 wobei R und R' gleiche oder unterschiedliche, substituierte, beispielsweise mit einer Hydroxy-, Alkyl- mit 1 bis 8, vorzugsweise 1 bis 4 Kohlenstoffatomen und/oder Halogen-Gruppe, bzw. unsubstituierte Alkyl-, vorzugsweise eine Alkylgruppe mit 1 bis 8 Kohlenstoffatomen, oder Aryl-Gruppen, vorzugsweise eine Acryl-Gruppe mit 6 bis 12 Kohlenstoffatomen, sein können, wobei R und R' vorzugsweise nicht identisch sind, und ein Anion ausgewählt aus Tetrafluorborat, Alkylborat, insbesondere Triethylhexylborat, Arylborat, Halogenphosphat, insbesondere Hexafluorphosphat, Nitrat, Sulfonate, insbesondere perfluorierte Alkyl- und Arylsulfonate, Hydrogensulfat, Alkylsulfate, insbesondere perfluorierte Alkyl- und Arylsulfate, Thiocyanate, perfluorierte Amide, Dicyanamid und/oder Bis(perfluoralkylsulfonyl)amid, insbesondere Bis(trifluormethansulfonyl)amid ((CF₃SO₂)₂N) aufweist.

Bevorzugt enthält die Elektrolytzusammensetzung ionische Flüssigkeiten (A) basierend auf 1-Alkyl'-3-Alkylimidazolium- oder Alkyl'trialkylammonium-Ionen, wobei die Substituenten Alkyl und Alkyl' nicht identisch sind und von 1 bis 8 Kohlenwasserstoffatome aufweisen, besonders bevorzugt jedoch sind ionischen Flüssigkeiten, ausgewählt aus 1-Ethyl-3-methylimidazolium-bis(trifluormethansulfonyl)imid, 1-Ethyl-3-methylimidazolium-tetrafluoroborat, 1-Ethyl-3-methylimidazolium-dicyanamid, 1-Ethyl-3-methylimidazolium-ethylsulfat, 1-Butyl-3-methylimidazolium-bis(trifluormethansulfonyl)imid, 1-Butyl-2,3-dimethylimidazolium-dicyanamid und/oder Methyl-trioctylammonium-bis(trifluormethansulfonyl)imid.

In einer besonderen Ausführungsform der Elektrolytzusammensetzung enthält diese zumindest eine ionische Flüssigkeit (A), die ein Kation basierend auf einem Ammonium-, bevorzugt Tetraalkylammonium- und besonders bevorzugt Trimethylalkylammonium- und/oder Triethylalkylammonium-Ion aufweist.

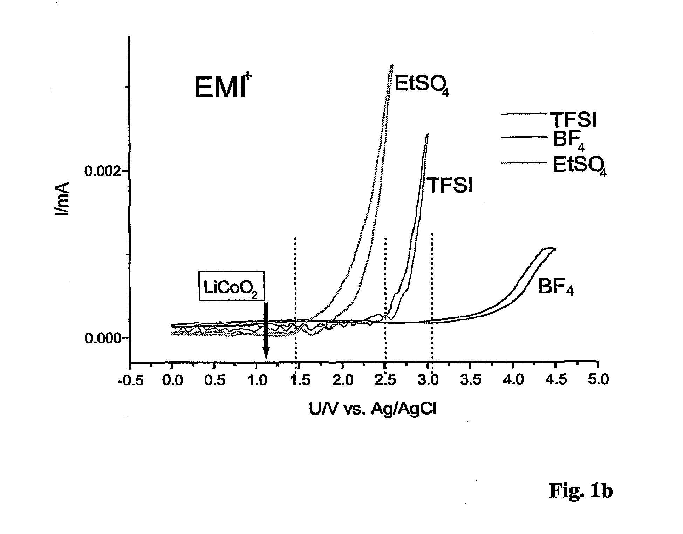

In einer weiteren Ausführungsform weist die Elektrolytzusammensetzung eine ionische Flüssigkeit (A) basierend auf einem Kation gemäß Fig. 1b, insbesondere basierend auf 4-Alkyl-pyridinium-Ion und bevorzugt basierend auf 4-Methyl-pyridinium-Ion auf.

Die Elektrolytzusammensetzung kann auch eine Mischung von zumindest zwei verschiedenen ionischen Flüssigkeiten (A) aufweisen. Hierbei kann die Elektrolytzusammensetzung zumindest zwei verschiedene Anionen und/oder zwei verschiedene Kationen bezogen auf die ionische Flüssigkeit (A) aufweisen.

Die ionische Flüssigkeit (A) ist in der Basiskomponente der Elektrolytzusammensetzung vorzugsweise von 80 bis 99,5 Gew.-%, bevorzugt von 90 bis 99 Gew.-%, besonders bevorzugt von 92 bis 98 Gew.-% und ganz besonders bevorzugt von 94 bis 97 Gew.-% bezogen auf die Basiskomponente enthalten.

Die Elektrolytzusammensetzung weist als Leitsalz (D) vorzugsweise eine Lithiumverbindung, bevorzugt LiPF₆, LiClO₄, LiAsF₆, LiBF₄, LiCF₃SO₃, LiN(CF₃SO₂)₂, LiN(SO₂CF₂CF₃)₂, LiSbF₆, LiAlCl₄, LiGaCl₄, LiCl, LiNO₃, LiSCN, LiO₃SCF₂CF₃, LiC₆F₅SO₃, LiO₂CCF₃, LiFSO₃, LiB(C₆H₅)₄, LiB(C₂O₄)₂, Lithiumfluoralkylphosphat und/oder Li(NTf₂) auf. Das Leitsalz ist in der Elektrolytzusammensetzung vorzugsweise von 0,25 mol/kg bis zur Löslichkeitsgrenze des Leitsalzes (D) in der Basiskomponente, bevorzugt von 0,25 bis 1,5 mol/(kg Basiskomponente), besonders bevorzugt von 0,4 bis 1,0 mol/(kg Basiskomponente) und ganz besonders bevorzugt 0,5 mol/(kg Basiskomponente) enthalten.

Als Filmbildner (B) enthält die Elektrolytzusammensetzung vorzugsweise eine organische Verbindung, bevorzugt eine organische Carbonatverbindung und besonders bevorzugt Vinylencarbonat. In einer besonderen Ausführungsform enthält die Elektrolytzusammensetzung als Filmbildner eine Verbindung ausgewählt aus Ethylensulfit, (Meth-)Acrylnitril, Ethylencarbonat, insbesondere halogeniertes Ethylencarbonat, bevorzugt Chlorethylencarbonat, Lithium-Borato-Komplexe, insbesondere Lithium-bis(oxalato)borat oder Lithium-bis(biphenylato)borat, Maleinsäureanhydrid, Pyridin, Dimethylacetamid, Anilin, Pyrrol, Thionylchlorid, gamma-Butyrolacton, Diallylcarbonat, Ameisensäurecyanmethylester, 4,4'-Bipyridyl, N,N-Dimethylacetamid oder Derivate dieser Verbindungen.

In einer besonderen Ausführungsform der Elektrolytzusammensetzung weist diese als Filmbildner (B) eine funktionalisierte ionische Flüssigkeit auf, die organische Kationen gemäß zumindest einer der Strukturen 1 bis 14 aufweist, wobei zumindest einer der Substituenten R1, R2, R3, R4, R5 und R6 eine Mehrfachbindung, vorzugsweise eine Doppelbindung aufweist.

Die Basiskomponente der Elektrolytzusammensetzung enthält den Filmbildner (B) vorzugsweise in einer Menge von 0,5 bis 10 Gew.-%, bevorzugt von 2 bis 8 Gew.-% und ganz besonders bevorzugt von 3 bis 6 Gew.-% bezogen auf die Basiskomponente.

Als Viskositätsmodifier (C) enthält die Elektrolytzusammensetzung vorzugsweise ein organisches, aprotisches Lösemittel, bevorzugt Carbonate, oder auch 1,2-Dimethoxyethan, Tetrahydrofuran, 2-Methyltetrahydrofuran, Diethylenglycoldialkylester, Dioxolan, Propylenoxid, Dimethylsulfoxid, Dimethylformamid, Formamid, Nitromethan, gamma-Butyrolacton, Carbonsäurealkylester und/oder Methyllactat. Dem Viskositätsmodifier (C) kann in diesem Falle auch ein Flammschutzmittel, ausgewählt aus chlorierten oder bromierten Kohlenwasserstoffen, aus halogenierten bzw. alkyl- oder aryl-substituierten Phosphanen, Phosphaten, Phosphonaten, Phosphoniten und Phosphiten zugesetzt sein. Die Elektrolytzusammensetzung kann als Viskositätsmodifier (C) auch eine ionische Flüssigkeit enthalten, auf diese Weise kann eine Elektrolytzusammensetzung erhalten werden, die nahezu keine leichtflüchtigen Komponenten enthält. Allgemein ist die Verwendung des Viskositätsmodifiers (C) in der Elektrolytzusammensetzung von der verwendeten ionischen Flüssigkeit (A) abhängig und dient dazu die Viskosität der Elektrolytzusammensetzung zu optimieren, vorzugsweise zu erniedrigen. Die Basiskomponente der Elektrolytzusammensetzung weist von 0 bis 10 Gew.-%, bevorzugt 0 bis 5 Gew.-% bezogen auf die Basiskomponente an dem Viskositätsmodifier (C) auf.

In der erfindungsgemäßen Verwendung weist der keramische Separator ein flächiges, mit einer Vielzahl von Öffnungen versehenes, flexibles Substrat mit einer auf und in diesem Substrat befindlichen porösen anorganischen Beschichtung auf, wobei das Material des Substrates ausgewählt ist aus gewebten oder ungewebten, nicht elektrisch leitfähigen Polymer- oder Naturfasern und eine Porosität von mehr als 50 % aufweist.

Vorzugsweise weist dieses Substrat eine Porosität von 50 bis 97 %, besonders bevorzugt von 75 bis 90 % und ganz besonders bevorzugt von 80 bis 90 % auf. Die Porosität ist dabei definiert als das Volumen des Vlieses (100 %) minus dem Volumen der Fasern des Vlieses, also dem Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen Gewicht des betrachteten Vlieses und der Dichte der Polymerfasern. Die große Porosität des Substrates ermöglicht auch eine höhere Porosität des erfindungsgemäßen hybriden Separators, weshalb eine höhere Aufnahme an Elektrolyten mit dem erfindungsgemäßen Separator erzielt werden kann.

Bevorzugt wird die Elektrolytzusammensetzung zur Herstellung einer Lithium-Ionen-Batterie eingesetzt, deren Separatoren eine Dicke von kleiner 80 µm, bevorzugt kleiner 75 µm, besonders bevorzugt eine Dicke von 10 bis 75 µm und ganz besonders bevorzugt eine Dicke von 15 bis 50 µm aufweisen. Durch die geringe Dicke wird ein besonders geringer elektrischer Widerstand des Separators in der Anwendung mit einem Elektrolyten erzielt. Der Separator selbst weist natürlich einen sehr hohen elektrischen Widerstand auf, da er selbst isolierende Eigenschaften aufweisen muss.

Bei der Verwendung der Elektrolytzusammensetzung zur Herstellung einer Lithium-Ionen-Batterie kann ein Separator eingesetzt werden, der als Material für das Substrat vorzugsweise nicht elektrisch leitfähige Fasern von Polymeren aufweist, die vorzugsweise ausgewählt aus Polyacrylnitril (PAN), Polyester, Polyamid (PA), Polyimid (PI), Polytetrafluorethylen (PTFE) und/oder Polyolefin (PO), wie z. B. Polypropylen (PP) oder Polyethylen (PE) oder Mischungen solcher Polyolefine sind. Es sind auch alle anderen in diesen sehr reaktiven Medien stabilen Polymere und auch stabile Naturfasern einsetzbar, die oben genannten sind aber besonders bevorzugte Materialien. Diese Polymerfasern weisen vorzugsweise einen Durchmesser von 0,1 bis 25 µm, besonders bevorzugt von 1 bis 10 µm auf.

Das Material des Substrates ist ausgewählt aus gewebten oder ungewebten Polymerfasern. Gewebte Polymerfasern können z. B. Gewebe sein. Ungewebte Polymerfasern können z. B. Gewirke, Vliese oder Filze sein. Besonders bevorzugt ist das Material des flexiblen Substrates ein Vlies aus Polymerfasern bzw. ein Vlies, welches Polymerfasern aufweist.

Das Substrat des Separators, der in der erfindungsgemäßen Verwendung der Elektrolytzusammensetzung eingesetzt wird, weist insbesondere ein Vlies mit einer Dicke von 1 bis 200 µm, vorzugsweise von 5 bis 50 µm und ganz besonders bevorzugt von 10 bis 30 µm auf. Die Dicke des Substrates hat einen großen Einfluss auf die Eigenschaften des Separators, da zum einen die Flexibilität aber auch der Flächenwiderstand des mit Elektrolyt getränkten Separators von der Dicke des Substrates abhängig ist. Zudem erlauben dünnere Separatoren eine erhöhte Packungsdichte in einem Batteriestapel, so dass man im gleichen Volumen eine größere Energiemenge speichern kann. Ferner kann dadurch auch die Grenzstromdichte, durch Vergrößerung der Elektrodenfläche, erhöht werden. Das Substrat des Separators weist ein Flächengewicht insbesondere von 1 bis 50 g/m², bevorzugt von 2 bis 30 g/m² und besonders bevorzugt von 4 bis 15 g/m² auf.

Der Separator der erfindungsgemäßen Verwendung weist eine poröse, elektrisch isolierende, keramische Beschichtung auf. Es kann vorteilhaft sein, wenn die auf und in dem Substrat befindliche Beschichtung ein nicht elektrisch leitendes Oxid der Metalle Al, Zr, und/oder Si, aufweist. Vorzugsweise weist dieser Separator eine Porosität von 10 % bis 80 %, bevorzugt von 20 % bis 70 % und besonders bevorzugt von 40 % bis 60 % auf. Die Porosität bezieht sich dabei auf die erreichbaren, also offenen Poren. Die Porosität kann dabei mittels der bekannten Methode der Quecksilber-Porosimetrie bestimmt werden oder kann aus dem Volumen und der Dichte der verwendeten Einsatzstoffe errechnet werden, wenn davon ausgegangen wird, dass nur offene Poren vorliegen.

Bei der erfindungsgemäßen Verwendung der Elektrolytzusammensetzung zeichnen sich die eingesetzten Separatoren durch eine Reißfestigkeit von mindestens 1 N/cm, vorzugsweise von mindestens 3 N/cm und ganz besonders bevorzugt von größer 6 N/cm aus. Die eingesetzten Separatoren lassen sich vorzugsweise ohne Beschädigung bis auf jeden Radius bis herab zu 100 mm, bevorzugt bis herab zu 50 mm, besonders bevorzugt bis herab zu 2 mm und ganz besonders bis herab zu 0,1 mm biegen. Die hohe Reißfestigkeit und die gute Biegbarkeit des eingesetzten Separatoren hat den Vorteil, dass beim Laden und Entladen einer Batterie auftretende Veränderungen der Geometrien der Elektroden durch den Separator mitgemacht werden können, ohne dass dieser beschädigt wird. Die Biegbarkeit hat zudem den Vorteil, dass mit diesem Separator kommerziell standardisierte Wickelzellen produziert werden können. Bei diesen Zellen werden die Elektroden/Separator-Lagen in standardisierter Größe miteinander spiralförmig aufgewickelt und kontaktiert.

In der erfindungsgemäßen Verwendung der Elektrolytzusammensetzung werden keramische Separatoren eingesetzt. Diese können aus einem keramischen Material aufgebracht auf ein Substrat, wie beispielsweise ein Polymerfaservlies, bestehen. Solche keramischen Separatoren werden unter anderem in den folgenden Patentanmeldungen beschrieben WO 03/021697, WO 03/072231, WO 03/073534, WO 2004/021469, WO 2004/021474, WO 2004/021475, WO 2004/021476, WO 2004/021477 und WO 2004/021499.

In einer weiteren erfindungsgemäßen Verwendung der Elektrolytzusammensetzung wird diese zur Herstellung von Lithium-Ionen-Batterien eingesetzt, deren Elektrodenmaterial nanoskalige Siliziumpartikel aufweist. Vorzugsweise wird die Elektrolytzusammensetzung bei Lithium-Ionen-Batterien eingesetzt, deren Elektrodenmaterial
- 5 - 85 Gew.-% nanoskalige Siliziumpartikel, die eine BET-Oberfläche von 5 bis 700 m²/g und einen mittleren Primärpartikeldurchmesser von 5 bis 200 nm aufweisen,
- 0 - 10 Gew.-% Leitruß,
- 5 - 80 Gew.-% Graphit mit einem mittleren Partikeldurchmesser von 1 µm bis 100 µm und
- 5 - 25 Gew.-% eines Bindemittels
aufweist, wobei die Anteile der Komponenten in Summe maximal 100 Gew.-% ergeben.

Ferner ist Gegenstand der Erfindung eine Lithium-Ionen-Batterie, die die Elektrolytzusammensetzung aufweist, wobei die Lithium-Ionen-Batterie neben der Elektrolytzusammensetzung einen Separator aufweist, der ein keramischer Separator ist, und wobei die Elektrolytzusammensetzung sich dadurch auszeichnet, dass sie eine Basiskomponente bestehend aus
80 bis 99,5 Gew.-% zumindest einer ionischen Flüssigkeit (A), die einen Schmelzpunkt von kleiner 100°C aufweist,
0,5 bis 10 Gew.-% eines Filmbildners (B) und
0 bis 10 Gew.-% eines Viskositätsmodifiers (C),
und ein Leitsalz (D), wobei dieses Leitsalz (D) von 0,25 mol/(kg Basiskomponente) bis zur Löslichkeitsgrenze in der Basiskomponente enthalten ist, aufweist.

Vorzugsweise weist der Separator der erfindungsgemäßen Lithium-Ionen-Batterie ein flächiges, mit einer Vielzahl von Öffnungen versehenes, flexibles Substrat mit einer auf und in diesem Substrat befindlichen porösen anorganischen Beschichtung, wobei das Material des Substrates ausgewählt ist aus gewebten oder ungewebten, nicht elektrisch leitfähigen Polymer- oder Naturfasern und das eine Porosität von mehr als 50 % aufweist.

Weiterhin kann die erfindungsgemäße Lithium-Ionen-Batterie neben der Elektrolytzusammensetzung zumindest eine Elektrode aufweisen, die aus einem Elektrodenmaterial besteht, die nanoskaligen Siliziumpulver aufweist. Vorzugsweise weist diese Elektrodenmaterial
- 5 - 85 Gew.-% nanoskalige Siliziumpartikel, die eine BET-Oberfläche von 5 bis 700 m²/g und einen mittleren Primärpartikeldurchmesser von 5 bis 200 nm aufweisen,
- 0 - 10 Gew.-% Leitruß,
- 5 - 80 Gew.-% Graphit mit einem mittleren Partikeldurchmesser von 1 µm bis 100 µm und
- 5 - 25 Gew.-% eines Bindemittels
auf, wobei die Anteile der Komponenten in Summe maximal 100 Gew.-% ergeben.

Im Rahmen dieser Erfindung wird unter nanoskaligen Siliziumpulver ein Siliziumpulver mit einem mittleren Primärpartikeldurchmesser von 5 bis 200 nm, bevorzugt von 5 bis 100 nm bzw. Primärpartikel, die sich zu Agglomeraten oder Aggregaten zusammengelagert haben, mit einer Größe von 20 bis 1000 nm verstanden. Die Partikeldurchmesser werden anhand von Aufnahmen mittels eines Transmissionselektronenmikroskops (TEM) ermittelt.

Die nachfolgenden Beispiele sollen die erfindungsgemäßen Elektrolytzusammensetzungen näher erläutern, ohne dass die Erfindung auf diese Ausführungsform beschränkt sein soll.

### Beispiel 1: Bestimmung der elektrochemischen Fenster der ionischen Flüssigkeiten

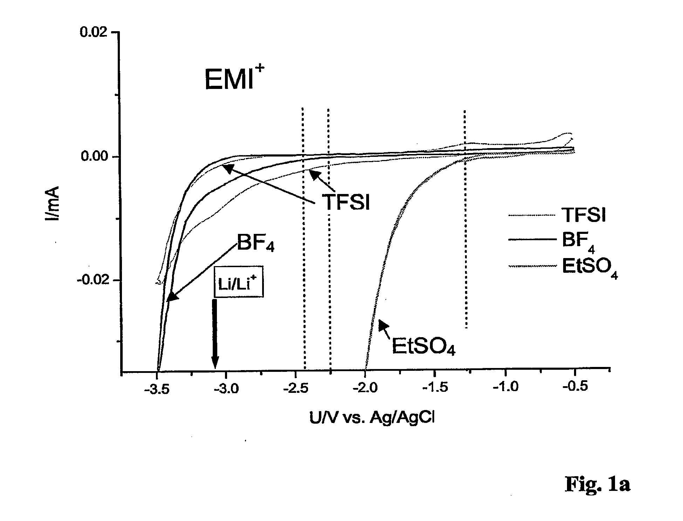

Um die Stabilität bzgl. elektrochemischen Prozessen der Elektrolytzusammensetzung zu ermitteln, wird das elektrochemische Fenster ermittelt. Hierbei wird kontinuierlich die an einem geeigneten Elektrodenpaar, welches in den Elektrolyten taucht, angelegte Potentialdifferenz erhöht, Auf diese Weise kann gemessen werden, bei welcher Spannung die Zersetzung des Elektrolyts erfolgt bzw. unter welchen Bedingungen keine Zersetzung des Elektrolyts erfolgt. Die Bestimmung des elektrochemischen Fensters der Elektrolytzusammensetzung wird in einer Glaszelle unter Argon ohne Zusatz eines Lithium-Salzes, Filmbildners oder eines Viskositätsmodifiers durchgeführt. Als Spannungsvorschub wird 5 mV/s gewählt. Als Referenz dient ein mit AgCl-beschichteter Ag-Stab, der ein Potential von -3,08 V vs. Li/Li⁺ aufweist. Die Messung erfolgt kathodisch an Kupfer (siehe Fig. 1a), anodisch jedoch an Aluminium (siehe Fig. 1b). Als Elektrolyt werden die folgenden ionischen Flüssigkeiten (A), die Hauptbestandteil der erfindungsgemäßen Elektrolytzusammensetzung sind, eingesetzt:
- 1-Ethyl-3-methylimidazolium-bis(trifluormethansulfonyl)imid (EMI-TFSI)
- 1-Ethyl-3-methylimidazolium-tetrafluoroborat (EMI-BF4)
- 1-Ethyl-3-methylimidazolium-ethylsulfat (EMI-EtSO₄)

Die Potentiale der Lithiumabscheidung und damit in etwa auch der Einlagerung von Lithium in Graphit und von LiCoO₂ sind in den Figuren 1a und 1b zu Vergleichszwecken mitangegeben. Es ist zu erkennen, dass die ionischen Flüssigkeiten anodisch (d.h. oxidativ) gegen LiCoO₂ stabil sind, während sie vor dem Erreichen des Lithiumpotentials kathodisch (d.h. reduktiv) zersetzt werden. Mit "Li/Li⁺" bzw. "LiCoO₂" in den Figuren 1a und 1b sind die jeweiligen elektrochemischen Potentiale der Lithium- bzw. LiCoO₂-Elektroden angegeben. Um eine elektrochemische Stabilität zu gewährleisten, darf die Probe - in diesem Falle die ionischen Flüssigkeiten - noch keinen Stromfluss innerhalb dieses Potentialbereichs (also rechts von "Li/Li⁺" und links von "LiCoO₂" in den jeweiligen Figuren) aufweisen. Dies ist in den obigen Beispielen nur für die positive Elektrode, also das LiCoO₂ gegeben. Gegen Lithium sind die ionischen Flüssigkeiten folglich nicht stabil. In den Figuren 1a und 1b bedeutet I/mA den Strom der zwischen Arbeits- und Gegenelektrode fließt (in mA) und U/V die elektrochemische Potentialdifferenz zwischen Arbeits- und Referenzelektrode (in Volt), bezogen auf die Ag/AgCl-Referenz.

### Beispiel 2: Versuche am negativen Elektrodenmaterial

Das elektrochemische Zyklen findet in sogenannten Halbzellenanordnungen statt. Bei der Halbzellenanordnung wird die Elektrolytzusammensetzung in einer Sandwich-Anordnung Arbeitselektrode - Separator/erfindungsgemäße Elektrolytzusammensetzung - Gegen-/Referenzelektrode gemessen. Als Arbeitselektrode (negative Elektrode) wird eine Elektrode mit einem Elektrodenmaterial bestehend aus 90 Gew.-% handelsüblichem SFG 44-Graphit der Firma TIMCAL SA, Schweiz und 10 Gew.-% Polyvinylidenfluorid(PVdF)-Binder eingesetzt. Ein teilweise lithiierter Li₄Ti₅O₁₂-Spinell, gegen den die ionischen Flüssigkeiten stabil sind, wurde als Gegen-/Referenzelektrode (positive Elektrode) eingesetzt, diese weist ein Potential von 1,56 V vs. Li/Li⁺ auf. Als Potentialgrenzen werden 0 und -1,55 V, dies entspricht 10 mV und 1,56 V vs. Li/Li⁺, verwendet. Die Zyklengeschwindigkeit wird mit der Stromdichte pro aktive Masse des Elektrodenmaterials angegeben. Der verwendete Wert hierfür beträgt 10 mA/g Graphit für den ersten Zyklus und 50 mA/g Graphit für die Folgezyklen. Das Laden und Entladen erfolgt mit einer Stromabsenkung beim Erreichen der Spannungsgrenze bis unter einen Wert, der 5 mA/g entspricht. Die Verwendung dieser Stromabsenkung ermöglicht, die Leistungsfähigkeit einer Elektrode (Anteil des Stroms, der im Konstantstrommodus, oder galvanostatischen Anteil, fließt) von eventuellen irreversiblen Schäden (die sich in einer Verringerung der gesamten, also einschließlich der im potentiostatischen Schritt fließenden, Kapazität) zu trennen (siehe hierzu H. Buqa et al. in ITE Battery Letters, 4 (2003), 38).

### 2.1 Versuch der Lithiumeinlagerung ohne Zusatz eines Filmbildners

Die eingesetzte Elektrolytzusammensetzung besteht aus:
- 100 Gew.-% 1-Ethyl-3-methylimidazolium-bis(trifluormethansulfonyl)imid als Basiskomponente
- 0,5 mol/(kg Basiskomponente) Lithium-bis(trifluormethansulfonyl)imid als Leitsalz.

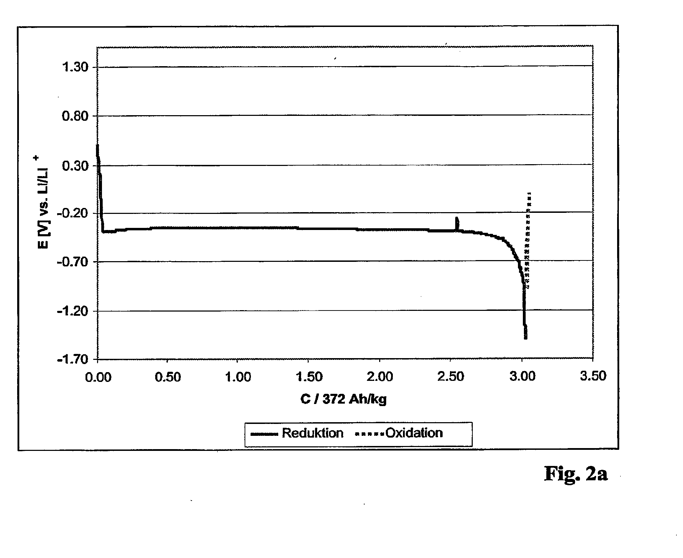

Fig. 2a zeigt, dass keine Einlagerung von Lithium in das Anodenmaterial möglich ist. Es findet eine reduktive Zersetzung der ionischen Flüssigkeit bei -0.3 - -0.4 V (ca. 1.1 - 1.2 V vs. Li/Li⁺) statt.

### 2.2 Versuch der Lithiumeinlagerung unter Zusatz eines Filmbildners

### 2.2.1 Vinylencarbonat als Filmbildner (B)

### a.) 10 Gew.-% Vinylencarbonat

Die eingesetzte Elektrolytzusammensetzung besteht aus:
- 90 Gew.-% 1-Ethyl-3-methylimidazolium-bis(trifluormethansulfonyl)imid und
- 10 Gew.- % Vinylencarbonat als Basiskomponente
und 0,5 mol/(kg Basiskomponente) Lithium-bis(trifluormethansulfonyl)imid als Leitsalz.

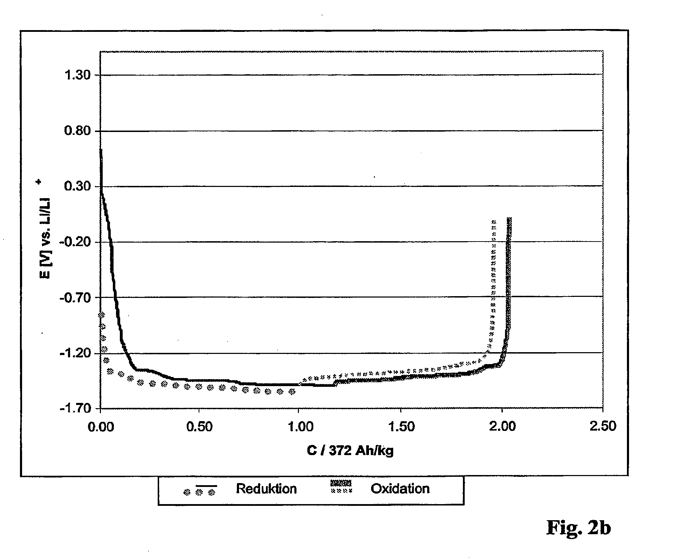

Fig. 2b zeigt, dass Lithium reversibel in den Graphit eingelagert wird, wobei bei dieser Art der Darstellung in Fig. 2b nur die ersten beiden Zyklen dargestellt sind. Die elektrochemische Kapazität entspricht in etwa der zu erwarteten für eine vollständige Lithiierung. Die Lithiumein- und -auslagerung ist über mehr als 30 Zyklen ohne Verlust der reversiblen Kapazität wiederholbar, aber mit noch relativ hohen irreversiblen Verlusten während den Zyklen. Dies kann durch das Verwenden von LiPF₆ als Leitsalz verbessert werden.

In den Figuren 2a und 2b bedeutet C die theoretische Nennkapazität des untersuchten Graphitmaterials (welche 372 mAh/g beträgt), es ist also die Kapazität des Graphits in Einheiten dieser Nennkapazität angegeben. E bezeichnet die elektrochemische Potentialdifferenz zwischen Arbeits- und Gegenelektrode (in Volt) bezogen auf das Potential von Lithiummetall.

### b.) 5 Gew.-% Vinylencarbonat

Die eingesetzte Elektrolytzusammensetzung besteht aus:
- 95 Gew.-% 1-Ethyl-3-methylimidazolium-bis(trifluormethansulfonyl)imid und
- 5 Gew.-% Vinylencarbonat als Basiskomponente
und 0,5 mol/(kg Basiskomponente) Lithium-hexafluorphosphat (LiPF₆) als Leitsalz.

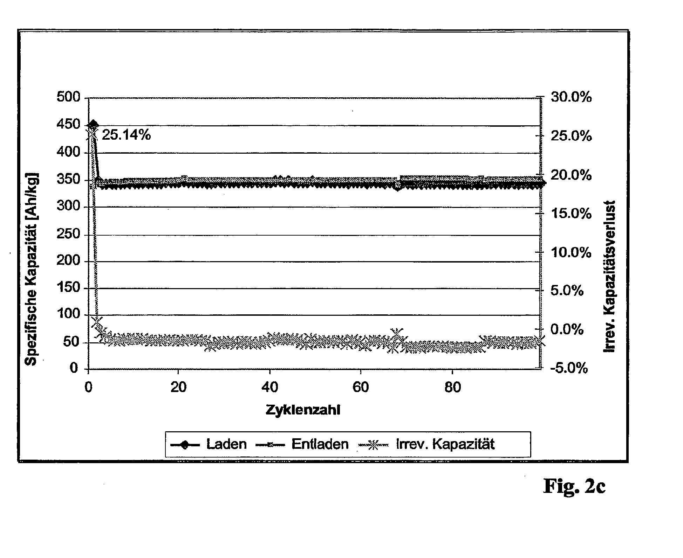

Fig. 2c zeigt ein gleichmäßiges Zyklenverhalten über mehr als 90 Zyklen. Es ist kein Fading festzustellen. Unter Fading wird im Rahmen dieser Erfindung die Abnahme der reversiblen (nutzbaren) Kapazität mit zunehmender Zyklenzahl verstanden. Es tritt eine sehr hohe Reversibilität der Lithiumeinlagerung bei der Verwendung von 5 Gew.-% Vinylencarbonat ein.

### c.) 2 Gew.-% Vinylencarbonat

Die eingesetzte Elektrolytzusammensetzung besteht aus:
- 98 Gew.-% 1-Ethyl-3-methylimidazolium-bis(trifluormethansulfonyl)imid und
- 2 Gew.-% Vinylencarbonat als Basiskomponente
und 0,5 mol/kg (Basiskomponente) Lithium-hexafluorphosphat (LiPF₆) als Leitsalz.

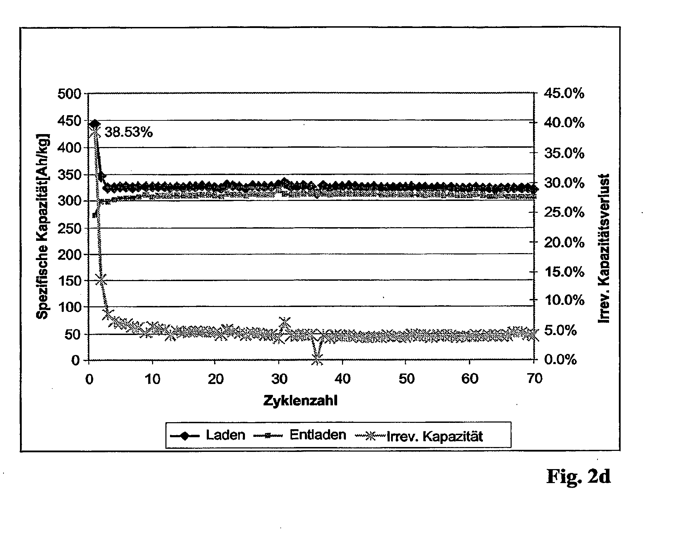

Fig. 2d zeigt das Verhalten bei einer weiteren Reduktion des Gehaltes an Filmbildner auf 2 Gew.-%. Es wird noch ein reversibles Zyklen nahezu ohne Fading ermöglicht, aber die irreversiblen Verluste pro Zyklus sind leicht erhöht.

### Beispiel 3: Versuche am Kathodenmaterial

Das elektrochemische Zyklen findet in sogenannten Halbzellenanordnungen statt. Bei der Halbzellenanordnung wird die Elektrolytzusammensetzung in einer Sandwich-Anordnung Arbeitselektrode - Separator/erfindungsgemäße Elektrolytzusammensetzung - Gegen-/Referenzelektrode gemessen. Als Arbeitselektrode wird eine Elektrode mit einem Elektrodenmaterial bestehend aus 86 Gew.-% LiCoO₂ in einer Graphit-Leitruß-Binder-Matrix eingesetzt. Ein nicht lithiierter Li₄Ti₅O₁₂-Spinell, gegen den die ionischen Flüssigkeiten stabil sind, wird als Gegen-/Referenzelektrode eingesetzt, diese weist ein Potential von 1,56 V vs. Li/Li⁺ auf. Als Potentialgrenzen werden 1,5 und 2,7 V verwendet, dies entspricht 3,05 und 4,25 V vs. Li/Li⁺. Die Zyklengeschwindigkeit wird mit der Stromdichte pro aktive Masse des Elektrodenmaterials angegeben. Der verwendete Wert hierfür beträgt 30 mA/g LiCoO₂.

### 3.1 Versuch ohne Zusatz eines Filmbildners

Die eingesetzte Elektrolytzusammensetzung besteht aus
- 100 Gew.-% 1-Ethyl-3-methylimidazolium-bis(trifluormethansulfonyl)imid als Basiskomponente und
- 0,5 mol/(kg Basiskomponente) Lithium-bis(trifluormethansulfonyl)imid als Leitsalz.

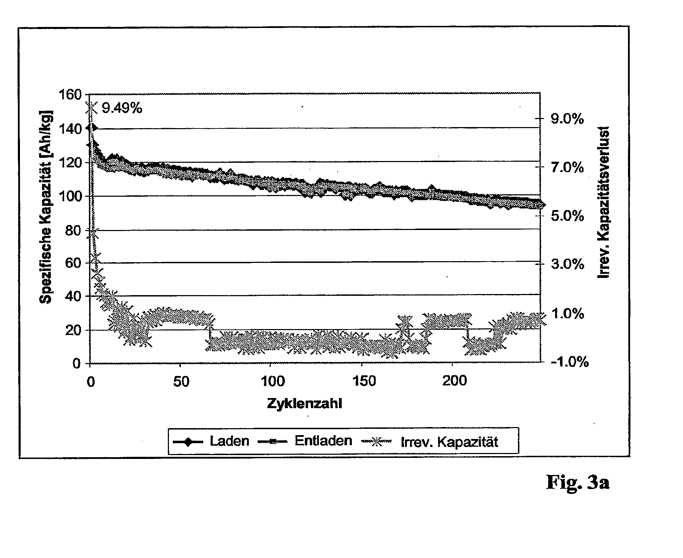

Fig. 3a zeigt bei über 250 Zyklen einen sehr geringen irreversiblen Verlust pro Zyklus. Fading liegt bei etwa 30% über die Gesamtzahl der Zyklen (250).

### 3.2 Versuch ohne Zusatz eines Filmbildners bei Anhebung der oberen Potentialgrenze

Die Potentialgrenze wurde von 2.7 V um 0,2 V auf 2,9 V (dies entspricht 4,45 V vs. Li/Li⁺) angehoben. Die anderen Versuchsparameter werden gemäß Beispiel 3.1 beibehalten.

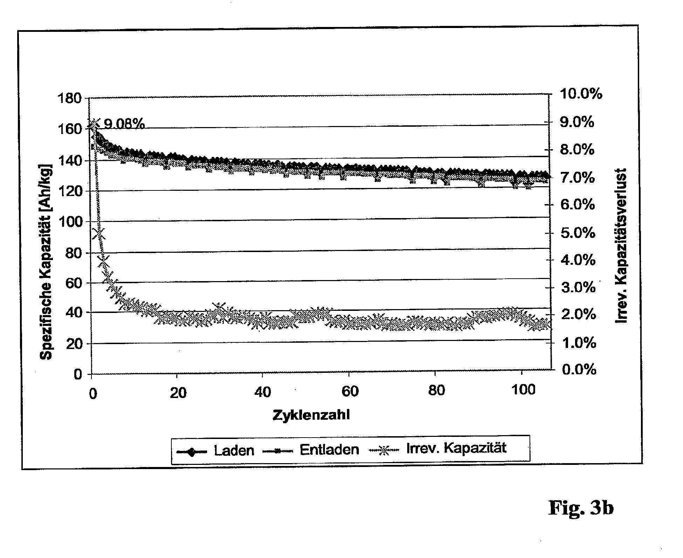

Fig. 3b zeigt, dass die Elektrode stabil bleibt, die Kapazität sich um 10 - 20 % erhöht. Eine etwas höhere Irreversible pro Zyklus kann vermerkt werden, aber das Fading ist nicht verschlechtert.

### 3.3 Versuch unter Zusatz eines Filmbildners

Die eingesetzte Elektrolytzusammensetzung besteht aus:
- 95 Gew.-% 1-Ethyl-3-methylimidazolium-bis(trifluormethansulfonyl)imid und
- 5 Gew.-% Vinylencarbonat als Basiskomponente
und 0,5 mol/(kg Basiskomponente) Lithium-hexafluorphosphat (LiPF₆) als Leitsalz.

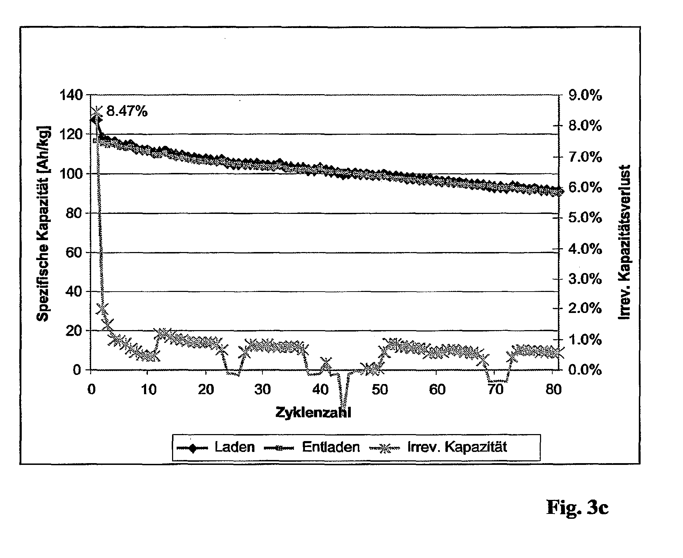

Fig. 3c zeigt, dass ein etwas höheres Fading als beim vinylencarbonatfreien Elektrolyten vorliegt, jedoch zeigt es ein immer noch zufriedenstellendes Verhalten.

### Beispiel 4: Test einer Komplettbatterie

In den Fällen der Komplettbatterien wird das Material in der Vollzellenanordnung Arbeitselektrode (Graphit) - Separator/Elektrolytzusammensetzung - Gegenelektrode (LiCoO₂) gegen das Standard-Kathodenmaterial LiCoO₂ gemessen. Als Potentialgrenzen werden hier von 2,5 bis 4,0 V verwendet. Die Zyklengeschwindigkeit wird mit der Stromdichte pro aktive Masse des Graphit-Elektrodenmaterials angegeben. Die verwendeten Werte hierfür betragen von 10 mA/g Graphit im ersten Zyklus und 50 mA/g Graphit in den Folgezyklen. Das Zyklen erfolgt in einer Komplettzelle gegen eine LiCoO₂-Elektrode. In diesem Beispiel wird der Betrieb einer Komplettbatterie unter Verwendung einer Elektrolytzusammensetzung bestehend aus:
- 95 Gew.-% 1-Ethyl-3-methylimidazolium-bis(trifluormethansulfonyl)imid und
- 5 Gew.-% Vinylencarbonat als Basiskomponente
und 0,5 mol/(kg Basiskomponente) Lithium-hexafluorphosphat (LiPF₆) als Leitsalz getestet.

Die Zelle ist graphitlimitiert, d.h. sie läuft somit mit einem Überschuss an positivem LiCoO₂-Elektrodenmaterial, um die beim Graphit höheren irreversiblen Verluste auszugleichen. Die in der Figur angegebenen reversiblen Kapazitäten beziehen sich dadurch auf die aktive Masse an Graphit.

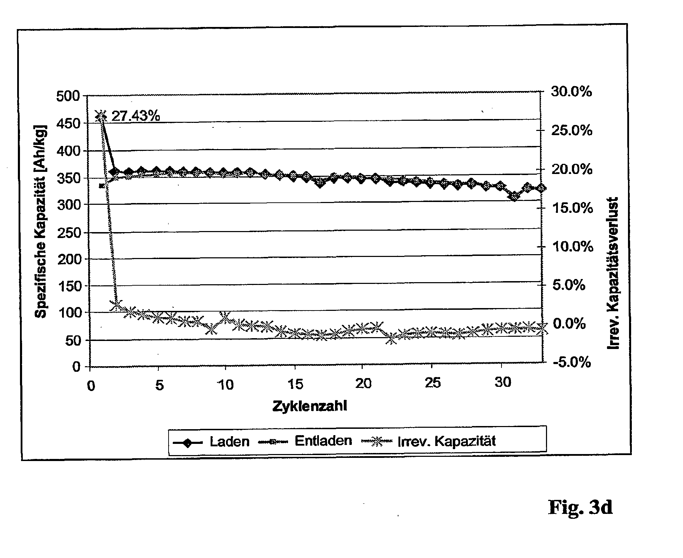

Fig. 3d zeigt, dass die Zelle ein korrektes Verhalten aufweist. Ein schwaches Fading ist sichtbar, aber kaum irreversible Verluste während des Zyklens.

### Beispiel 5: Test einer Vollzelle unter Verwendung einer Elektrolytzusammensetzung und eines keramischen Separators

Das elektrochemische Zyklen fand in der Halbzellenanordnung - wie bereits in Beispiel 2 beschrieben - mit Graphit als Arbeitselektrode statt Als Separator wurde der keramische Separator Separion S 450 der Firma Degussa AG - Creavis Technologies & Innovation verwendet. Die eingesetzte Elektrolytzusammensetzung besteht aus:
- 95 Gew.-% 1-Ethyl-3-methylimidazolium-bis(trifluormethansulfonyl)imid und
- 5 Gew.-% Vinylencarbonat als Basiskomponente
und 0,5 mol/(kg Basiskomponente) Lithium-hexafluorphosphat (LiPF₆) als Leitsalz.

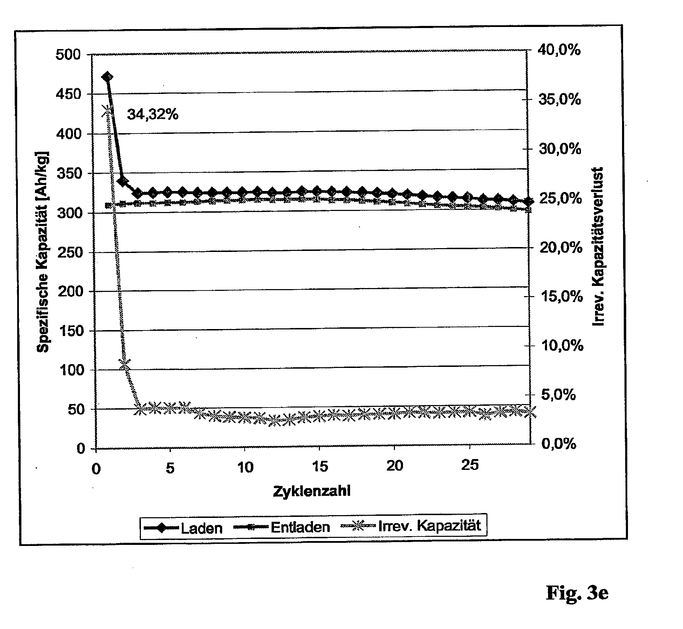

Die Zyklengeschwindigkeit hierfür betrug 10 mA/g Graphit für den ersten Zyklus und 50 mA/g Graphit für die Folgezyklen. Fig. 3e zeigt das Zyklenverhalten.

### Beispiel 6: Vorversuche zur thermischen Stabilität der Kombination eines keramischen Separators und des Hauptbestandteils der Elektrolytzusammensetzung - der ionischen Flüssigkeit (A)

In einem Schnappdeckelgläschen wird ein 1,5 cm x 1,5 cm zugeschnittenes Stück des Separators in ionischer Flüssigkeit dispergiert. Mittels Ölbad werden diese Proben zunächst einer thermischen Behandlung unterzogen. Anschließend werden die Proben des Separators mit Ethanol vorsichtig von ionischer Flüssigkeit gereinigt und luftgetrocknet. Die Proben des Separators werden daraufhin makroskopisch und mittels einer Lupe auf einem Lichttisch analysiert und beurteilt, hierbei wird v.a. auf die Verformung, Aufhellung und den Abrieb des Separators geachtet.

Als Separatoren wurden folgende Produkte eingesetzt:
SE1 Polyolefin 6022 der Fa. ASAHI
SE2 Celgard^{®} 2500 Microporous Membrane der Fa. Celgard
SE3 Separion S 450 der Fa. Degussa AG - Creavis Technologies & Innovation (keramischer Separator)

Als ionische Flüssigkeiten (A) wurden folgende Produkte eingesetzt:
IL1 2-Ethyl-3-methyl-2-oxazolinium-methylsulfat (gemäß eine dem Fachmann geläufige Umsetzung von 2-Ethyl-oxazolin mit Dimethylsulfat hergestellt)
IL2 1-Ethyl-3-methyl-imidazolium-bis(trifluormethansulfonyl)amid (gemäß dem Stand der Technik (P. Bonhote, A.-P. Dias, N. Papageorgiou, K. Kalyanasundaram, M. Grätzel, Inorg. Chem. 1996, 35, 1168; L. Cammata, S. Kazarian, P. Salter, T. Welton, Phys. Chem. Chem. Phys. 2001, 3, 5192) hergestellt)
IL3 Rewoquat CPEM der Fa. Goldschmidt Rewo GmbH

Rewoquat CPEM weist die folgende Struktur auf:

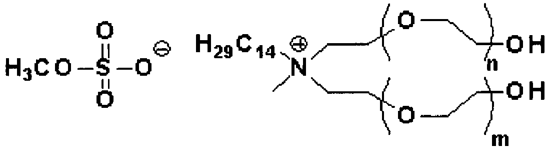

Die ionischen Flüssigkeiten haben folgendes Aussehen vor der thermischen Behandlung zusammen mit einem Separator:
IL1 gelblich, klar und dünnflüssig,
IL2 schwach gelblich, klar und dünnflüssig und
IL3 gelblich, klar und dickflüssig.

Eine Zusammenstellung der Versuchsparameter sowie der Ergebnisse zeigen die Tabellen 1 und 7.

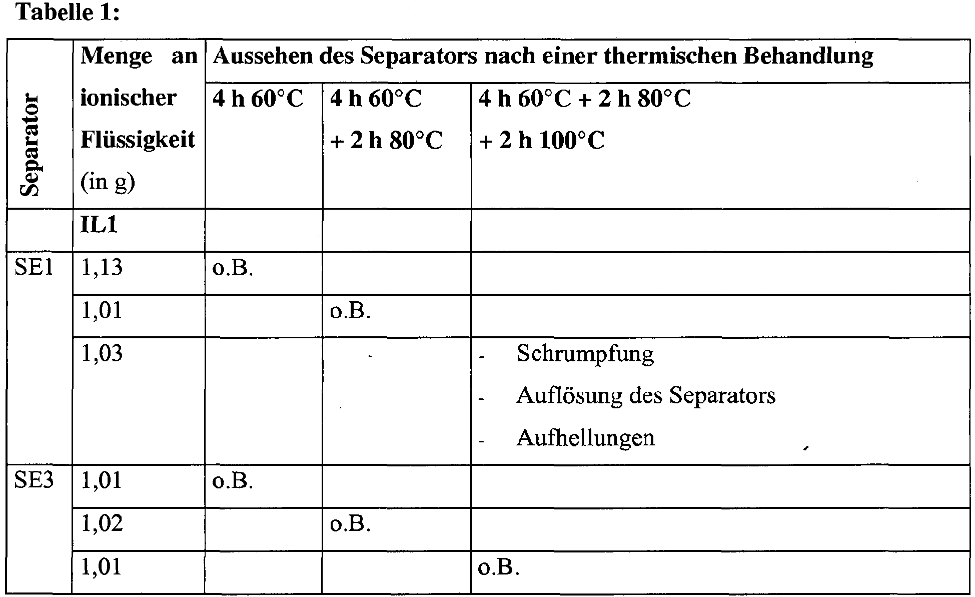

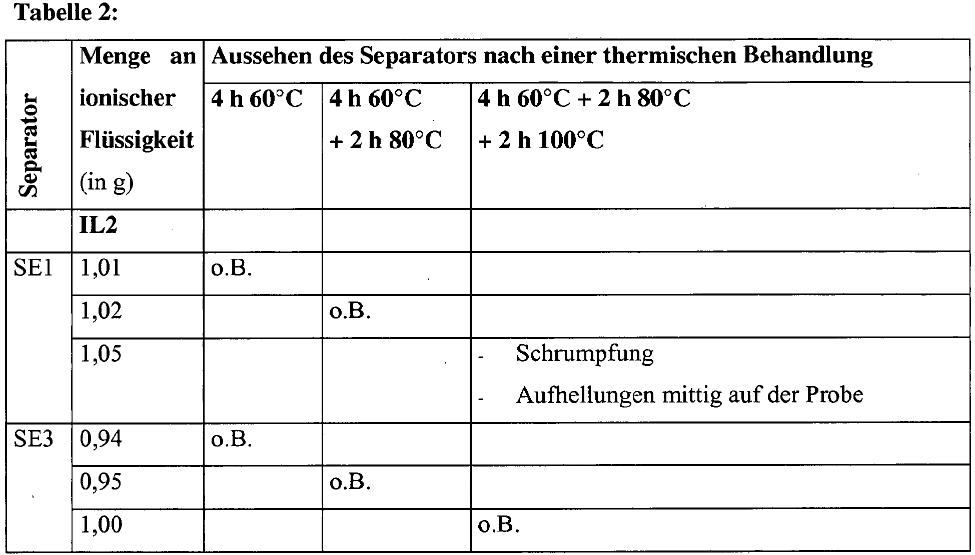

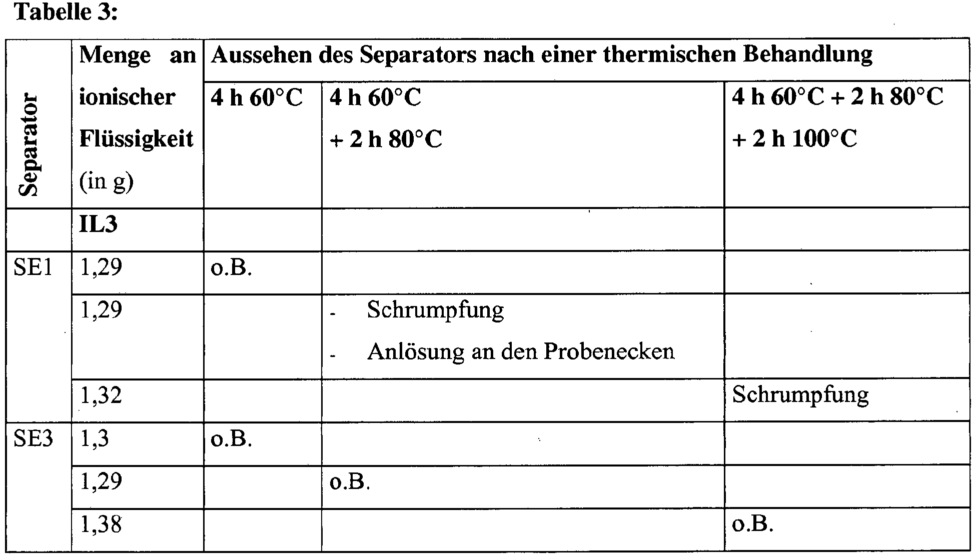

o.B.: Oberfläche des Separators ist stabil, es ist kein Abrieb an der Separatorprobe zu erkennen, keine thermische Schrumpfung des Separators, sowie keine Beeinträchtigung zu beobachten.

Die Proben mit dem Separator SE1 schwimmen auf der ionischen Flüssigkeit IL1 bzw. IL2, wobei die ionische Flüssigkeit an der Separatorprobe abperlt. Die Separatorproben mussten währen der thermischen Behandlung immer wieder mit der ionischen Flüssigkeit beträufelt werden. Im Gegensatz hierzu zeigt der Separator SE3 eine gute Benetzbarkeit durch die eingesetzte ionische Flüssigkeit IL1 bzw. IL2.

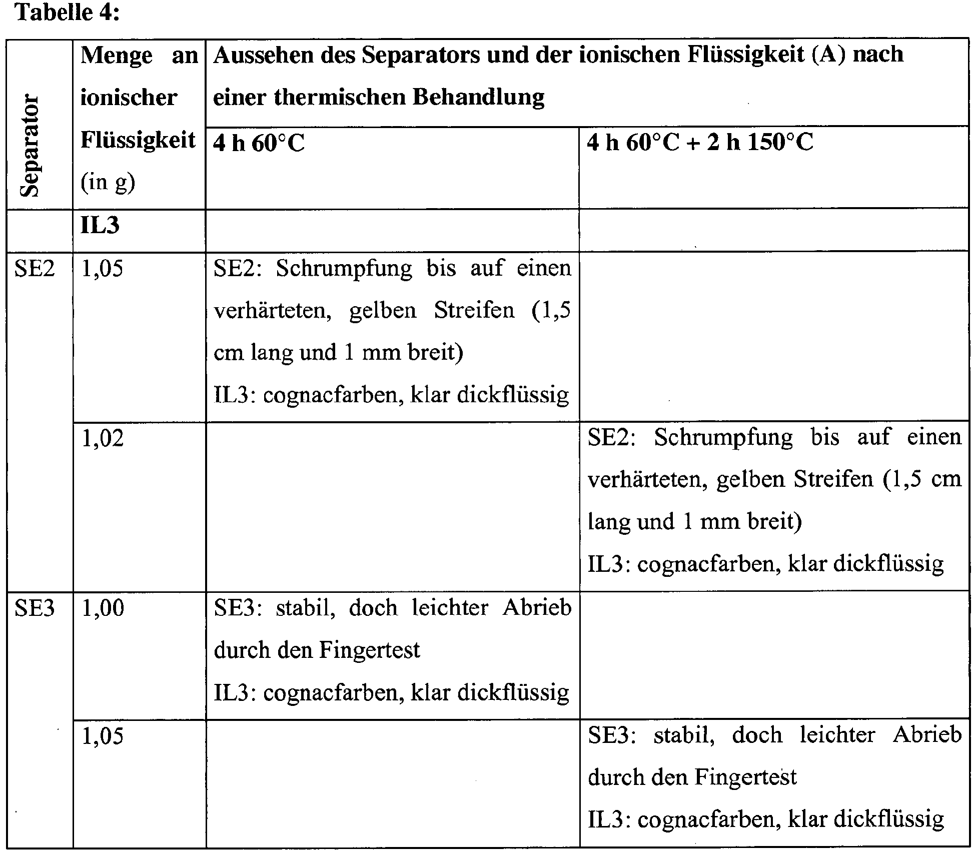

Beim Fingertest wird die mechanische Stabilität des Separators durch Reiben zwischen den Fingern getestet und anschließend die Separatoroberfläche unter dem Lichtmikroskop betrachtet.

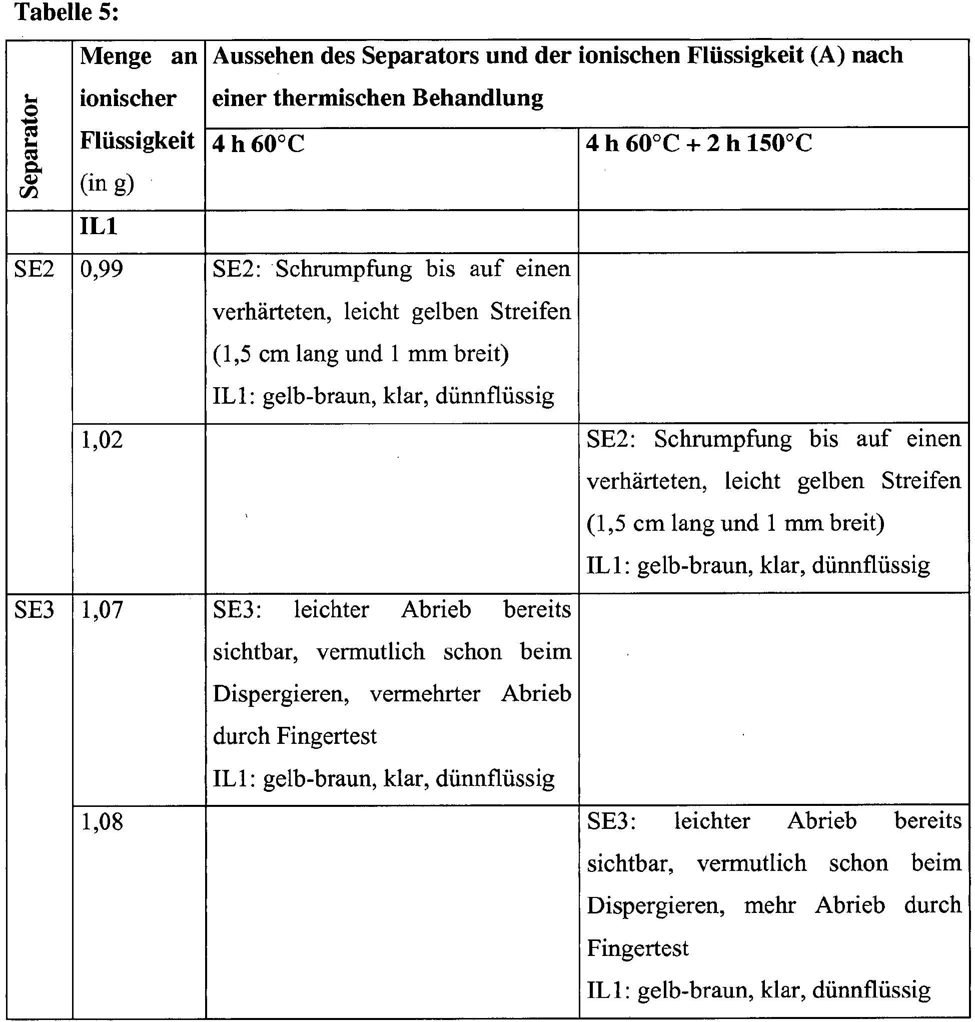

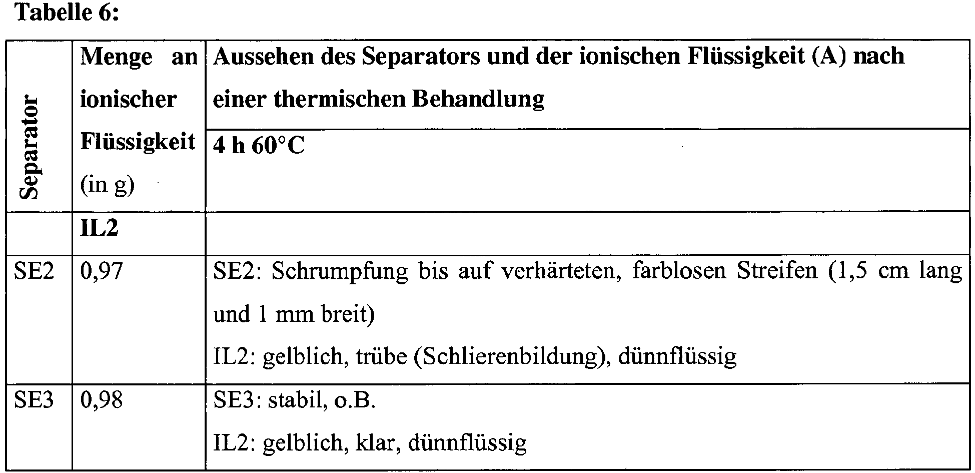

Die Proben mit dem Separator SE2 schwimmen auf der ionischen Flüssigkeit IL1 bzw. IL2, wobei die ionische Flüssigkeit an der Separatorprobe abperlt. Die Separatorproben mussten währen der thermischen Behandlung immer wieder mit der ionischen Flüssigkeit beträufelt werden.

## Patentansprüche

1. Verwendung einer Elektrolytzusammensetzung in elektrochemischen Energiespeichersystemen,
**dadurch gekennzeichnet**,
dass die Elektrolytzusammensetzung eine Basiskomponente, bestehend aus 80 bis 99,5 Gew.-% zumindest einer ionischen Flüssigkeit (A), die einen Schmelzpunkt von kleiner 100 °C aufweist,
0,5 bis 10 Gew.-% eines Filmbildners (B) und
0 bis 10 Gew.-% eines Viskositätsmodifiers (C)
und ein Leitsalz (D), wobei dieses Leitsalz (D) von 0,25 mol/(kg Basiskomponente) bis zur Löslichkeitsgrenze in der Basiskomponente enthalten ist, aufweist,
und
die elektrochemischen Energiespeichersysteme Lithium-Ionen-Batterien sind, die einen keramischen Separator aufweisen.

2. Verwendung gemäß Anspruch 1,
**dadurch gekennzeichnet**,
dass der keramische Separator ein flächiges, mit einer Vielzahl von Öffnungen versehenes, flexibles Substrat mit einer auf und in diesem Substrat befindlichen porösen anorganischen Beschichtung aufweist, wobei das Material des Substrates ausgewählt ist aus gewebten oder ungewebten, nicht elektrisch leitfähigen Polymer- oder Naturfasern und eine Porosität von mehr als 50 % aufweist.

3. Lithium-Ionen-Batterie, die eine Elektrolytzusammensetzung und einen Separator aufweist,
**dadurch gekennzeichnet**,
dass die Elektrolytzusammensetzung eine Basiskomponente, bestehend aus 80 bis 95 Gew.-% zumindest einer ionischen Flüssigkeit (A), die einen Schmelzpunkt von kleiner 100 °C aufweist,
0,5 bis 10 Gew.-% eines Filmbildners (B) und
0 bis 10 Gew.-% eines Viskositätsmodifiers (C),
und ein Leitsalz (D), wobei dieses Leitsalz (D) von 0,25 mol/(kg Basiskomponente) bis zur Löslichkeitsgrenze in der Basiskomponente enthalten ist, aufweist, und der Separator ein keramischer Separator ist.

4. Lithium-Ionen-Batterie gemäß Anspruch 3,
**dadurch gekennzeichnet**,
dass der keramische Separator ein flächiges, mit einer Vielzahl von Öffnungen versehenes, flexibles Substrat mit einer auf und in diesem Substrat befindlichen porösen anorganischen Beschichtung ist, wobei das Material des Substrates ausgewählt ist aus gewebten oder ungewebten, nicht elektrisch leitfähigen Polymer- oder Naturfasern und eine Porosität von mehr als 50 % aufweist.

## Claims

1. Use of an electrolyte composition in electrochemical energy storage systems, **characterized in that** the electrolyte composition comprises a base component, consisting of 80% to 99.5% by weight of at least one ionic liquid (A) which has a melting point of less than 100°C,
0.5% to 10% by weight of a film former (B) and
0% to 10% by weight of a viscosity modifier (C) and a conducting salt (D) in a fraction ranging from 0.25 mol/(kg of base component) to the solubility limit in the base component,
and
the electrochemical energy storage systems are lithium-ion batteries which comprise a ceramic separator.

2. Use according to Claim 1,
**characterized in that**
the ceramic separator comprises a sheetlike flexible substrate having a multiplicity of openings and a porous inorganic coating on and in this substrate, the material for the substrate being selected from woven or non-woven nonelectroconductive polymeric or natural fibers and having a porosity of more than 50%.

3. Lithium-ion battery comprising an electrolyte composition and a separator,
**characterized in that**
the electrolyte composition comprises a base component, consisting of
80% to 95% by weight of at least one ionic liquid (A) which has a melting point of less than 100°C, 0.5% to 10% by weight of a film former (B) and 0% to 10% by weight of a viscosity modifier (C), and a conducting salt (D) in a fraction ranging from 0.25 mol/(kg of base component) to the solubility limit in the base component, and the separator is a ceramic separator.

4. Lithium-ion battery according to Claim 3,
**characterized in that**
the ceramic separator is a sheetlike flexible substrate having a multiplicity of openings and a porous inorganic coating on and in this substrate, the material for the substrate being selected from woven or non-woven nonelectroconductive polymeric or natural fibers and having a porosity of more than 50%.

## Revendications

1. Utilisation d'une composition d'électrolyte dans des systèmes de stockage d'énergie électrochimiques, **caractérisée en ce que** la composition d'électrolyte comprend un composant de base, constitué de 80 à 99,5 % en poids d'au moins un liquide ionique (A), qui présente un point de fusion inférieur à 100 °C,
0,5 à 10 % en poids d'un agent filmogène (B) et
0 à 10 % en poids d'un modificateur de viscosité (C),
et un sel conducteur (D), ce sel conducteur (D) étant contenu à hauteur de 0,25 mol/(kg de composant de base) jusqu'à la limite de solubilité dans le composant de base,
et
les systèmes de stockage d'énergie électrochimiques sont des batteries aux ions lithium qui comprennent un séparateur céramique.

2. Utilisation selon la revendication 1, **caractérisée en ce que** le séparateur céramique comprend un substrat flexible plat muni d'une pluralité d'ouvertures, avec un revêtement inorganique poreux se trouvant sur et dans ce substrat, le matériau du substrat étant choisi parmi les fibres polymères ou naturelles non électriquement conductrices tissées ou non tissée, et présentant une porosité de plus de 50 %.

3. Batterie aux ions lithium, qui comprend une composition d'électrolyte et un séparateur, **caractérisée en ce que** la composition d'électrolyte comprend un composant de base, constitué de 80 à 95 % en poids d'au moins un liquide ionique (A), qui présente un point de fusion inférieur à 100 °C,
0,5 à 10 % en poids d'un agent filmogène (B) et
0 à 10 % en poids d'un modificateur de viscosité (C),
et un sel conducteur (D), ce sel conducteur (D) étant contenu à hauteur de 0,25 mol/(kg de composant de base) jusqu'à la limite de solubilité dans le composant de base, et le séparateur est un séparateur céramique.

4. Batterie aux ions lithium selon la revendication 3, **caractérisée en ce que** le séparateur céramique comprend un substrat flexible plat muni d'une pluralité d'ouvertures, avec un revêtement inorganique poreux se trouvant sur et dans ce substrat, le matériau du substrat étant choisi parmi les fibres polymères ou naturelles non électriquement conductrices tissées ou non tissée, et présentant une porosité de plus de 50 %.
